# EUROPÄISCHE PATENTSCHRIFT

(11) **EP 1 700 177 B1**
(45) Veröffentlichungstag und Bekanntmachung des Hinweises auf die Patenterteilung: **05.08.2009**
(21) Anmeldenummer: 04804770.8
(22) Anmeldetag: 10.12.2004
(51) Int. Cl.: G05D 23/24

(54) **SCHALTUNGSANORDNUNG ZUM SCHUTZ EINES HEIZELEMENTS VOR ÜBERHITZUNG, HEIZVORRICHTUNG UND VERFAHREN ZUM ABSICHERN DER HEIZVORRICHTUNG**
CIRCUIT ARRANGEMENT FOR PROTECTION OF A HEATING ELEMENT FROM OVERHEATING HEATING DEVICE AND METHOD FOR FUSED PROTECTION OF THE HEATING DEVICE
ENSEMBLE CIRCUIT DESTINE A PROTEGER UN ELEMENT CHAUFFANT CONTRE LA SURCHAUFFE, DISPOSITIF CHAUFFANT ET PROCEDE POUR PROTEGER PAR FUSIBLES CE DISPOSITIF CHAUFFANT

(30) Priorität: 22.12.2003 DE 10360553
(43) Veröffentlichungstag der Anmeldung: 13.09.2006
(73) Patentinhaber: BSH Bosch und Siemens Hausgeräte GmbH, 81739 München (DE)
(72) Erfinder: OTTO, Manuel, 89407 Dillingen (DE); SCHWEIER, Peter, 86735 Forheim (DE); STICKEL, Martin, 89537 Giengen (DE); WAGNER, Franz-Josef, 86720 Nördlingen (DE)
(86) Internationale Anmeldenummer: PCT/EP2004/053402
(87) Internationale Veröffentlichungsnummer: WO 2005/062149

(56) Entgegenhaltungen:
- EP-A- 0 579 947
- US-A- 4 198 957

## Beschreibung

Die Anmeldung betrifft eine Schaltungsanordnung zum Schutz eines Heizelements vor Überhitzung, dessen Widerstandswert eine Funktion seiner Temperatur ist. Die Anmeldung betrifft weiterhin eine Heizvorrichtung für Fluide.

Heizelemente, die in Heizeinrichtungen zum Erhitzen von Fluiden zum Einsatz kommen, können bei einem Trockengang der Heizeinrichtung sowie beim Überkochen von Wasser bleibend geschädigt werden. Zur Wassererwärmung in Haushaltsgeräten, wie z.B. Wasserkochern, Kaffeemaschinen, Geschirrspülmaschinen, Waschmaschinen, werden unter anderem auf Dickschichttechnik basierende elektrische Widerstandsheizungen als Heizelemente eingesetzt. An diese werden bestimmte Sicherheitsanforderungen gestellt. Zum Beispiel muss eine Absicherung gegen Brand, gegen Undichtheit und gegen Spannungsüberschläge auf das Heizelement gegeben sein. Insbesondere Spannungsüberschläge dürfen nach einer gültigen Norm nicht über die bestehenden Gebäude- oder Haussicherungen abgesichert werden. Um dieses Erfordernis zu erfüllen, werden üblicherweise Thermoschutzschalter, Druckschalter, welche die Anwesenheit eines Fluids detektieren, oder Schmelzsicherungen eingesetzt, die im Falle eines Trockenganges und der dabei entstehenden ständigen Erwärmung des Heizelementes zum Schmelzen gelangen und den Heizkreis auftrennen.

Diese Sicherungen weisen jedoch beträchtliche Nachteile auf. Der oben erwähnte Druckschalter hat ein relativ träges Ansprechverhalten. Schmelzsicherungen führen bei einem Auslösen zu einem irreversiblen Auftrennen des Heizkreises, wodurch die Heizvorrichtung einen Defekt aufweist und somit zu einem Kundendienstfall, der hohe Kosten nach sich zieht, führt.

Wünschenswert wäre deshalb ein Sicherungssystem, das auf einfache, schnelle und kostengünstige Weise eine Heizvorrichtung der vorher genannten Art unabhängig von einer eventuell vorhandenen Gerätesteuerung schützt.

Aus der EP 0 845 119 B1 ist eine Schaltungsanordnung zum Regeln der Temperatur eines Heizelementes bekannt, dessen Widerstandswert eine Funktion seiner Temperatur ist. Hierzu weist die Schaltungsanordnung ein mit dem Heizelement gekoppeltes Stromsensormittel auf, das an einem Ausgang eine Wechselspannung liefert, die von dem das Heizelement durchlaufenden Wechselstrom abhängig ist. Dieses Signal und ein von einem Benutzer vorgegebener Referenzwert werden einem ersten Detektormittel zugeführt. Dieser liefert ein Ausgangssignal, wenn die Temperatur des Heizelementes die vom Benutzer eingestellte Temperatur überschreitet. Über eine Schaltersteuerungsschaltung wird dann ein seriell mit dem Heizelement verschaltenes Schaltmittel nach den Puls-Pausen-Prinzip angesteuert.

Aus der US 4,035,692 ist weiterhin eine Schaltungsanordnung zum Schutz eines Bremswiderstandes in einem Traktionsmotor bekannt. Diese weist eine mit dem Bremswiderstand gekoppelte Stromversorgung auf, um einen Strom an dem Bremswiderstand über ein Schaltmittel zu liefern. Ein mit dem Bremswiderstand gekoppeltes Stromsensormittel, an dessen Ausgang ein dem durch den Bremswiderstand fließenden Strom proportionales Signal abgreifbar ist, sowie ein erstes Skaliermittel in Form eines Potentiometers und eines dazu seriell verschaltenen Widerstandes, an dessen Ausgang ein der Versorgungsspannung des Bremswiderstands proportionales Signal abgreifbar ist, werden einem Differenzverstärker zugeführt, das einen der Temperatur entsprechenden Spannungswert liefert. Dieses Signal wird dazu verwendet, den Bremswiderstand vor einer Überhitzung zu schützen, indem das Schaltmittel geöffnet wird.

Aus der US 4,198,957 ist eine Schaltungsanordnung zur Temperaturregelung eines Heizelementes eines chirurgischen Schneidelementes bekannt. Die Schaltungsanordnung umfasst ein Heizelement, das mit einer Stromversorgung gekoppelt ist, die das Heizelement über ein Schaltmittel mit elektrischer Energie versorgt. Ferner ist eine Schaltersteuerungsschaltung mit einem Ausgang zum Ansteuern des Schaltmittels vorgesehen, wobei das Schaltmittel leitend schaltet, wenn sich die Schaltersteuerungsschaltung in einem ersten Zustand befindet, und nicht leitend geschaltet ist, wenn sich die Schaltersteuerungsschaltung in einem zweiten Zustand befindet. Des Weiteren ist ein Stromsensormittel vorgesehen, das mit dem Heizelement gekoppelt ist, wobei an den Ausgang des Stromsensormittels ein Signal abgreifbar ist, das zu dem durch das Heizelement fließenden elektrischen Strom proportional ist. Außerdem ist ein erstes Skaliermittel vorgesehen, das einen Ausgang aufweist, an dem ein der Versorgungsspannung des Heizelementes proportionales Signal abgreifbar ist, sowie ein erstes Detektormittel, das jeweilige mit den Ausgängen des Sensorstrommittels und des Skaliermittels verbundene Eingänge aufweist, wobei an dessen Ausgang eineaus den Signalen des Stromsensormittels und des Skaliermittels gebildetes Differenzsignal abgreifbar ist. Schließlich ist eine Auswerteschaltung vorgesehen, mit der das von dem ersten Detektor ermittelte Differenzsignal mit einem Differenzsignal vergleichbar ist und abhängig von dem Ergebnis die Schaltersteuerungsschaltung durch die Auswerteschaltung von dem ersten in den zweiten Zustand bringbar ist.

Aus der EP 0579947 A1 ist eine Geschirrspülmaschine mit einer Einrichtung zur Temperaturkontrolle eines elektrischen Heizelementes bekannt, bei der ein Heizelement abwechselnd in einer Heizperiode mit einer Stromquelle verbunden ist, die elektrische Energie zum Erwärmen des Heizelementes bereitstellt und in einer Messperiode mit einer Messeinrichtung verbunden ist, die eine Konstantstromquelle aufweist, um einen Messstrom einzuprägen. Übersteigt der Spannungsabfall in einer dieser Messperioden einen vorgegebenen Referenzwert wird über ein Relais die Stromversorgung des Heizelementes mit der ersten genannten Quelle unterbrochen.

Die Aufgabe der vorliegenden Erfindung ist es daher, eine Schaltungsanordnung zum Schutz eines Heizelements vor Überhitzung mit gesteigerter Genauigkeit anzugeben, welche einfach, schnell und kostengünstig ist. Weiterhin soll eine gegen Überhitzung geschützte Heizvorrichtung zum Schutz einer solchen Vorrichtung angegeben werden.

Diese Aufgabe wird mit einer Schaltungsanordnung mit den Merkmalen des Patentanspruchs 1 und mit einer Heizvorrichtung mit den Merkmalen des Patentanspruchs 11 gelöst. Vorteilhafte Ausgestaltungen ergeben sich aus den abhängigen Patentansprüchen.

Erfindungsgemäß weist die Schaltungsanordnung zum Schutz eines Heizelementes vor Überhitzung, dessen Widerstandswert eine Funktion seiner Temperatur ist, folgende Merkmale auf:
eine mit dem Heizelement gekoppelte Stromversorgung zum Liefern eines Stromes an das Heizelement über ein Schaltmittel;
eine Schaltersteuerungsschaltung mit einem Ausgang zum Steuern des Schaltmittels, wobei das Schaltmittel leitend geschalten ist, wenn sich die Schaltersteuerungsschaltung in einem ersten Zustand befindet, und nicht leitend geschalten ist, wenn sich die Schaltersteuerungsschaltung in einem zweiten Zustand befindet;
ein mit dem Heizelement gekoppeltes Stromsensormittel, an dessen Ausgang ein dem durch das Heizelement fließenden Strom proportionales Signal abgreifbar ist;
ein erstes Skaliermittel, an dessen Ausgang ein der Versorgungsspannung des Heizelements proportionales Signal abgreifbar ist;
ein erstes Detektormittel, das jeweilige mit den Ausgängen des Stromsensormittels und des ersten Skaliermittels gekoppelte Eingänge hat, und an dessen Ausgang eine aus den Signalen des Stromsensormittels und des Skaliermittels gebildete Differenzsignal abgreifbar ist;
eine Auswerteschaltung, mit der die von dem ersten Detektormittel ermittelte Differenzsignal mit einem Referenzsignal vergleichbar ist und abhängig von dem Ergebnis die Schaltersteuerungsschaltung durch die Auswerteschaltung von dem ersten in den zweiten Zustand bringbar ist.

Weicht der Widerstand des Heizelementes von seinem Nennwiderstand ab, so liegt am Ausgang des ersten Detektormittels eine Spannung an. Die absolute Höhe dieser Differenzspannung ist von der Betriebsspannung abhängig. Dies ist der Fehler, der durch den Abbruch der Taylorreihe nach dem zweiten Glied entsteht. Daher ist erfindungsgemäß vorgesehen, dass die Auswerteschaltung ein zweites Detektormittel mit zwei Eingängen und einem Ausgang aufweist, wobei einem Eingang das Ausgangssignal des ersten Detektormittels und dem anderen Eingang das Referenzsignal zuführbar ist und wobei der Ausgang des zweiten Detektormittels den Ausgang der Auswerteschaltung bildet.

Die Erfindung beruht damit auf der Erkenntnis, dass der Widerstand eines Heizelementes ein charakteristisches Temperaturverhalten besitzt. Je nach Ausführung des Heizelements kann er steigen, fallen oder gleich bleiben. In den ersten beiden Fällen ist eine indirekte Temperaturüberwachung des Heizelements durch eine Widerstandsüberwachung des Heizelements möglich. Überschreitet bzw. unterschreitet der Widerstand des Heizelements einen bestimmten Wert, so liegt eine Überhitzung vor.

Die direkte Messung des Widerstands des Heizelements ist nicht möglich, da dieses im Betrieb mit der Versorgungsspannung beaufschlagt ist. Der Widerstand muss damit indirekt über die Messung des Stroms durch das Heizelement und der Spannung an dem Heizelement errechnet werden.

Nach dem ohmschen Gesetz müsste dazu das Verhältnis von Spannung zu Strom ermittelt werden. Dies ist zwar möglich, jedoch aufwendig. Die Erfindung greift stattdessen auf eine Annäherung der Verhältnisbildung (Division) durch eine Taylorreihenentwicklung zurück und bricht diese nach dem zweiten Glied ab. Die Division wird damit durch eine Subtraktion ersetzt, die schaltungstechnisch durch das erste Detektormittel sehr einfach zu realisieren ist. Dies bedeutet, dass aus der Hyperbel der Division eine fallende Gerade wird. Der dabei entstehende Fehler spielt für die Funktion der Schaltungsanordnung keine grundsätzliche Rolle, wenn vor der analogen Subtraktion von Spannung und Strom beide Terme auf die gleiche Größe normiert werden. Dies geschieht einerseits durch das erste Skaliermittel, welche die Spannung normiert. Die Betriebsspannung des Heizelementes kann mittels eines Spannungsteilers auf einen gewünschten Wert verringert werden. Der Spannungsteiler stellt damit das erste Skaliermittel dar. Der Strom durch das Heizelement durchfließt einen Shunt, an dem eine dem Strom proportionale Spannung anliegt. In dem ersten Detektormittel ist vorzugsweise ein weiteres Skaliermittel vorgesehen, welches das von dem Stromsensormittel gelieferte Signal entsprechend normiert.

Bevorzugt sind das Stromsensormittel und das Skaliermittel derart konfiguriert, dass die an ihren Ausgängen abgreifbaren Signale bei Nennwiderstand des Heizelementes die gleiche Größe aufweisen. Damit sind der Spannungsteiler und der Shunt vorzugsweise so ausgelegt, dass bei Nennwiderstand des Heizelements beide Spannungen gleich groß sind.

Ändert sich nun die Betriebsspannung des Heizelementes um einen gewissen Prozentsatz, so ändert sich damit auch der Strom durch das Heizelement um diesen Prozentsatz. Die mittels dem ersten Skaliermittel bzw. dem Stromsensormittel gewonnenen Mess-Spannungen ändern sich damit um den gleichen Prozentsatz, weswegen ihre Differenz weiterhin 0 bleibt. Ändert sich allerdings der Widerstand des Heizelementes temperaturbedingt, so ergibt sich am Ausgang des ersten Detektormittels ein durch die Auswerteschaltung detektierbares Signal. Dieses kann mit einem Referenzsignal verglichen werden, woraus auf eine Überhitzung des Heizelementes geschlossen werden kann. In diesem Fall kann das Heizelement durch Auftrennen der elektrischen Verbindung über das Schaltmittel vor einer Beschädigung geschützt werden. Die Auswerteschaltung ist zu diesem Zweck mit der Schaltersteuerungsschaltung verbunden, die von dem ersten in den zweiten Zustand wechselt und damit das Schaltmittel öffnet.

Die Schaltungsanordnung ist deshalb bevorzugt so ausgeführt, dass die Differenzspannung in der Auswerteschaltung mit einem festen Schwellwert verglichen wird. In diesem Fall wird bei einer Versorgungsspannung, die über der Nennspannung liegt, die Schutzschaltung bei einer kleineren Widerstandsänderung ansprechen. Entsprechendes gilt umgekehrt bei einer Spannung unterhalb der Nennspannung.

Zur Einstellung des Referenzsignals weist die Auswerteschaltung bevorzugt ein zweites Skaliermittel auf. Das zweite Skaliermittel ist in einer besonders vorteilhaften Ausgestaltung mit der das Heizelement beaufschlagenden Versorgungsspannung gekoppelt, um das Referenzsignal aus der Versorgungsspannung abzuleiten. Wird nämlich als Referenzsignal ein Schwellwert verwendet, der mittels des Skaliermittels aus der Netzspannung gewonnen wird, so kann dadurch die Betriebsspannungs-Empfindlichkeit des ersten Detektormittels kompensiert werden.

Zweckmäßigerweise wird in einer weiteren vorteilhaften Ausgestaltung der Ausgang des zweiten Detektormittels auf einen Eingang rückgekoppelt. Die Auswerteschaltung wird dadurch mit einer Hysterese versehen, um ein schnelles und sicheres Schalten des Schaltmittels, gesteuert über die Schaltersteuerungsschaltung, im Fehlerfall zu ermöglichen. In diesem Fall unterbricht das Schaltmittel die Verbindung zu dem Heizelement. Die Schaltungsanordnung sieht damit effektiv eine Heizvorrichtung mit unendlich hohem Widerstand. Genau dies ist jedoch die Auslösebedingung, so dass die Schaltungsanordnung weiterhin in dem Zustand verbleibt, in dem der Heizkreis des Heizelementes aufgetrennt ist. Die Schaltungsanordnung hat damit Selbsthaltecharakter.

In einer weiteren Ausgestaltung ist vorgesehen, dass die Stromversorgung des Heizelements eine Wechselstromversorgung ist und zwischen das erste und das zweite Detektormittel eine Gleichrichter-Anordnung und eine Glättungsschaltung geschalten sind, die Teil der Auswerteschaltung sind. Beim Betrieb der Schaltungsanordnung mit Wechselspannung liegt am Ausgang des ersten Detektormittels eine Wechselspannung an, deren Höhe von der Widerstandsabweichung abhängt. Die Phasenlage gibt an, ob der Widerstand größer bzw. kleiner als der Nennwiderstand ist. Dies gilt dann, wenn das Heizelement hauptsächlich ohmsches Verhalten zeigt. Zur weiteren Auswertung muss diese Wechselspannung gleichgerichtet und tiefpass-gefiltert werden. Wird eine phasenselektive Gleichrichtung eingesetzt, so bleibt die Information über die Über- bzw. Unterschreitung erhalten. Ansonsten kann nach der Gleichrichtung nicht mehr unterschieden werden, ob eine Über- bzw. Unterschreitung des Widerstandes des Heizelementes vorliegt.

Weiterhin ist vorgesehen, dass das Schaltmittel ein Relais ist, das bei ordnungsgemäßem Betrieb des Heizelementes durch den ersten Zustand der Schaltersteuerungsschaltung angezogen ist. Dies bedeutet, dass das Relais aus Sicherheitsgründen derart verschalten ist, dass es bei ordnungsgemäßem Betrieb der Heizung angezogen ist.

Der Tiefpass für Wechselspannungsbetrieb ist derart auszulegen, dass er die beim Ein- und Ausschalten der Heizung entstehenden Peaks am Ausgang des ersten Detektormittels abfängt und damit verhindert, dass der beschriebene "Selbsthalte-Zustand" bereits beim Einschalten des Heizelementes eintritt.

Das durch die erfindungsgemäße Schaltungsanordnung zu überwachende Heizelement ist bevorzugt eine elektrische Widerstandsheizung, insbesondere aus einer Dickschichtpaste, mit einem PTC-Verhalten, bei der der Widerstand mit zunehmender Temperatur steigt. Heizelemente dieser Art sind gegen Überhitzung besonders anfällig und benötigen deshalb eine besonders schnelle Sicherungsvorrichtung. Dies kann in der Regel durch die bislang verwendeten Schmelzsicherungen nicht gewährleistet werden.

Die erfindungsgemäße Heizvorrichtung für Fluide weist eine erfindungsgemäße Schaltungsanordnung zum Schutz eines Heizelementes vor Überhitzung auf. Mit dieser sind die gleichen Vorteile verbunden, wie dies weiter oben in Verbindung mit der erfindungsgemäßen Schaltungsanordnung erläutert wurde.

Im Gegensatz zu üblichen Sicherungsvorkehrungen, bei denen eine Heizvorrichtung mit einer thermisch-mechanischen Sicherung, in der Regel einer Schmelzsicherung, ausgeführt wurde, greift das erfindungsgemäße Verfahren zum Absichern einer Heizvorrichtung für Fluide mit einem Heizelement gegen Beschädigung erstmals auf eine elektronische Sicherung zurück. Bei diesem Verfahren ist der Widerstandwert des Heizelementes eine Funktion seiner Temperatur und es wird die Veränderung des Widerstandes detektiert und mit einem Referenzsignal verglichen. Abhängig von dem Vergleich wird gegebenenfalls der Heizkreis über ein Schaltmittel unterbrochen.

Die Erfindung wird nachfolgend in Verbindung mit der einzigen Figur näher erläutert, aus der die schaltungstechnische Realisierung der erfindungsgemäßen Schaltungsanordnung ersichtlich wird.

Ein Heizelement 1, das als elektrische Widerstandsheizung ausgeführt ist, ist mit einem Schaltmittel 2 und einem Stromsensormittel 4 in Form eines Shunts seriell zwischen einem ersten Versorgungsanschluss VA1 und einem zweiten Versorgungsanschluss VA2 verschalten. Zwischen den Versorgungsanschlüssen VA1, VA2 liegt eine Eingangsspannung U_{E} an.

Das Schaltmittel 2 in Form eines Relais ist über eine Schaltersteuerungsschaltung 3 steuerbar. In der Figur weist die Schaltersteuerungsschaltung 3 einen zweiten Zustand auf, in dem das Schaltmittel nicht-leitend geschalten ist. Demgegenüber ist das Schaltmittel 2 leitend geschalten, wenn sich die Schaltersteuerungsschaltung 3 in einem ersten Zustand befindet. Die Schaltersteuerungsschaltung 3 weist einen Transistor 32 auf, der mit einem ersten Hauptanschluss mit einem Relais 33 verbunden ist. Der andere Hauptanschluss des Transistors 32 bildet einen Ausgang 36 der Schaltersteuerungsschaltung 3 und ist mit einer Energieversorgung 200 verbunden. Mit dieser ist auch das Relais über einen weiteren Ausgangsanschluss 35 der Schaltersteuerungsschaltung 3 verbunden.

Die Energieversorgung 200, die nachfolgend nicht weiter beschrieben wird, weist im Wesentlichen eine Gleichrichterschaltung auf, die das an den Versorgungsanschlüssen VA1, VA2 anliegende Wechselspannungs- bzw. Wechselstromsignal gleichrichtet und auf ein entsprechendes Niveau transferiert, um die Schaltersteuerungsschaltung 3 und weitere, später beschriebene, Schaltungselemente mit Energie zu versorgen.

Der zwischen dem Heizelement 1 und dem Stromsensormittel 4 gebildete Knotenpunkt bildet einen Ausgang 41 des Stromsensormittels. Zwischen dem Ausgang 41 und dem Versorgungsanschluss VA2 liegt die Spannung U_{S} an. Der Ausgang 41 ist mit einem Eingang 63 eines ersten Detektormittels 6 gekoppelt. Genauer ist der Ausgang 41 über einen Widerstand 64 mit dem invertierenden Eingang 63 eines Komparators 61 des ersten Detektormittels 6 verbunden. Ein zweiter Eingang des ersten Detektormittels 6 ist mit einem ersten Skaliermittel 5 verbunden, das durch einen Spannungsteiler, bestehend aus den Widerständen 51, 52, gebildet ist. Das Skaliermittel 5 ist zwischen dem ersten Versorgungsanschluss VA1 und einem Bezugspotentialanschluss BP verschalten. Der zwischen den Widerständen 51, 52 gebildete Knotenpunkt 53 ist mit dem zweiten Eingang des ersten Detektormittels 6 verbunden. Genauer besteht eine Verbindung zwischen dem Knotenpunkt 53 und dem nicht-invertierenden Eingang 62 des Komparators 61. Über dem Widerstand 51 liegt die Spannung UV an, die dem nicht-invertierenden Eingang 62 des Komparators zugeführt wird. Ein Ausgang 66 des Komparators 61 bildet gleichzeitig den Ausgang des ersten Detektormittels 6. Dieser ist über einen Widerstand 65 mit dem Eingang 63 des Komparators 61 elektrisch verbunden. Die Widerstände 64, 65 bilden ein Skaliermittel für das Stromsensormittel 4.

Am Ausgang 66 des Komparators bzw. Differenzverstärkers liegt beim Betrieb des Heizelementes 2 mit einer Wechselspannung ebenfalls eine Wechselspannung an, deren Höhe von der Widerstandsabweichung abhängt. Zur weiteren Auswertung dieses Wechselspannungssignals wird diese über eine Gleichrichteranordnung 7, die durch eine Diode gebildet ist, und eine Glättungsschaltung 8, die als Tiefpassfilter ausgebildet ist, ausgewertet. Die Glättungsschaltung 8 weist einen mit der Gleichrichteranordnung 7 seriell verschaltenen Widerstand 81 auf. Zwischen dem Ausgang 84 der Glättungsschaltung und einem Bezugspotentialanschluss sind ein weiterer Widerstand 83 sowie ein Ladungsspeicher 82 verschalten. Sämtliche mit dem Bezugszeichen BP versehenen Bezugspotentialanschlüsse können untereinander eine elektrische Verbindung aufweisen.

Der Ausgang 84 der Glättungsschaltung 8 ist mit einem Eingang 102 eines zweiten Detektormittels 10 verbunden. Dieser Eingang ist mit dem invertierenden Eingang eines Komparators 101 verbunden. Der zweite Eingang des zweiten Detektormittels 10 ist mit einem zweiten Skaliermittel 9 gekoppelt. Dieses besteht wiederum aus einem Spannungsteiler mit den Wiederständen 91,92. Das zweite Skaliermittel 9 ist zwischen dem Bezugspotentialanschluss BP und der Energieversorgung 200 verschalten. Der Knotenpunkt zwischen den Wiederständen 91,92 ist mit dem zweiten Eingang des zweiten Detektormittels 10 bzw. dem nicht-invertierenden Eingang 103 des Komparators 101 verbunden. Dieser nicht-invertierende Eingang 103 ist über einen Widerstand 104 mit einem Ausgang 106 des Komparators 101 verbunden, welcher gleichzeitig den Ausgang des zweiten Detektormittels bzw. des aus dem ersten Detektormittel 6, der Gleichrichteranordnung 7, der Glättungsschaltung 8, dem zweiten Skaliermittel 9 und dem zweiten Detektormittel 10 gebildeten Auswerteschaltung entspricht. Der Ausgang 106 ist mit der Schaltersteuerungsschaltung 3 gekoppelt. Der Eingangsanschluss 31 der Schaltersteuerungsschaltung 3 wird dabei durch den Steueranschluss des Transistors 32 gebildet. Das zweite Detektormittel ist mit einer Hysterese versehen, welche durch den Widerstand 104 ermöglicht wird. Diese gewährleistet ein schnelles und sicheres Schalten des in der Schaltersteuerungsschaltung 3 befindlichen Relais in einem Fehlerfall. Dieses unterbricht die Verbindung des Heizelementes 1 zu den Versorgungsanschlüssen VA1, VA2 und schaltet die Schaltersteuerungsschaltung 3 von einem ersten in einen zweiten Zustand.

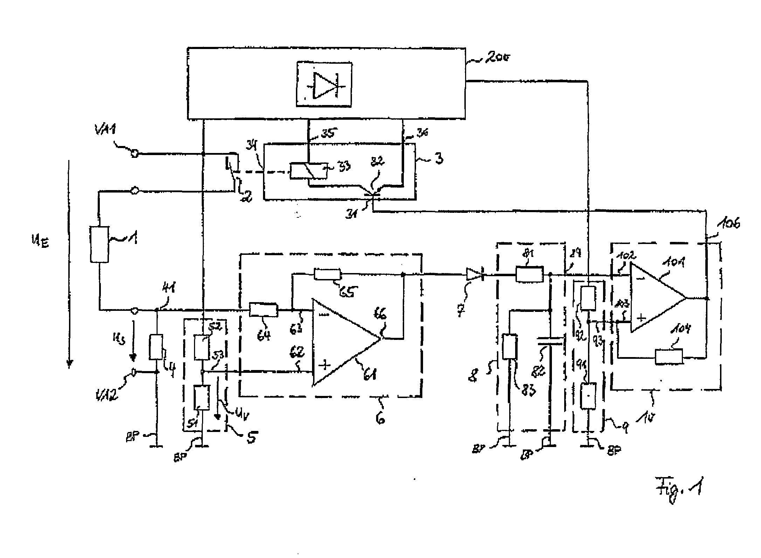

In dieser in der Figur 1 dargestellten Situation sieht die Schaltungsanordnung ein Heizelement mit unendlich hohem Widerstand. Dies entspricht der Auslösebedingung der erfindungsgemäßen Schaltungsanordnung, wodurch diese weiterhin in dem sicheren Zustand verbleibt. Auf einfache Weise ist damit ein Selbsthaltecharakter bewerkstelligt.

Mit der vorliegenden Schaltungsanordnung können besonders zuverlässige Heizvorrichtungen für Fluide bereitgestellt werden, bei denen im Fall eines Trockenganges eine mechanische Beschädigung der Heizvorrichtung ausgeschlossen bleibt, wie dies bei den bislang verwendeten Schmelzsicherungen der Fall ist.

## Patentansprüche

1. Schaltungsanordnung zum Schutz eines Heizelements (1) vor Überhitzung, dessen Widerstandswert eine Funktion seiner Temperatur ist, wobei die Schaltungsanordnung folgende Merkmale aufweist:
eine mit dem Heizelement (1) gekoppelte Stromversorgung zum Liefern eines Stromes an das Heizelement (1) über ein Schaltmittel (2);
eine Schaltersteuerungsschaltung (3) mit einem Ausgang (34) zum Steuern des Schaltmittels (2), wobei das Schaltmittel (2) leitend geschalten ist, wenn sich die Schaltersteuerungsschaltung (10) in einem ersten Zustand befindet, und nicht leitend geschalten ist, wenn sich die Schaltersteuerungsschaltung (3) in einem zweiten Zustand befindet;
ein mit dem Heizelement (1) gekoppeltes Stromsensormittel (4), an dessen Ausgang (41) ein dem durch das Heizelement (1) fließenden Strom proportionales Signal abgreifbar ist;
ein erstes Skaliermittel (5), an dessen Ausgang (51) ein der Versorgungsspannung des Heizelements (1) proportionales Signal abgreifbar ist;
ein erstes Detektormittel (6), das jeweilige mit den Ausgängen (41,51) des Stromsensormittels (4) und des ersten Skaliermittels (5) gekoppelte Eingänge (62,63) hat, und an dessen Ausgang (66) eine aus den Signalen des Stromsensormittels (4) und des Skaliermittels (5) gebildete Differenzsignal abgreifbar ist; und
eine Auswerteschaltung (7;8;9;10), mit der die von dem ersten Detektormittel (6) ermittelte Differenzsignal mit einem Referenzsignal vergleichbar ist und abhängig von dem Ergebnis die Schaltersteuerungsschaltung (3) durch die Auswerteschaltung (3) von dem ersten in den zweiten Zustand bringbar ist, **dadurch gekennzeichnet, dass** die Auswerteschaltung ein zweites Detektormittel (10) mit zwei Eingängen (101,102) und einem Ausgang (106) aufweist, wobei einem Eingang (101) das Ausgangssignal des ersten Detektormittels (6) und dem anderen Eingang (102) das Referenzsignal zuführbar ist und wobei der Ausgang (106) den Ausgang der Auswerteschaltung bildet.

2. Schaltungsanordnung nach Anspruch 1, **dadurch gekennzeichnet, dass** das Stromsensormittel (4) und das erste Skaliermittel (5) derart konfiguriert sind, dass die an ihren Ausgängen (41,51) abgreifbaren Signale bei Nennwiderstand des Heizelements (1) die gleiche Größe aufweisen.

3. Schaltungsanordnung nach Anspruch 1 oder 2, **dadurch gekennzeichnet, dass** durch das erste Detektormittel (6) eine Differenzspannung nur bei einer Widerstandsänderung des Heizmittels (1) detektierbar ist.

4. Schaltungsanordnung nach einem der vorhergehenden Ansprüche, **dadurch gekennzeichnet, dass** die Auswerteschaltung ein zweites Skaliermittel (9) aufweist, das zur Einstellung des Referenzsignals dient.

5. Schaltungsanordnung nach Anspruch 4, **dadurch gekennzeichnet, dass** das zweite Skaliermittel (9) mit der das Heizelement (1) beaufschlagenden Versorgungsspannung gekoppelt ist, um das Referenzsignal aus der Versorgungsspannung abzuleiten.

6. Schaltungsanordnung nach einem der vorhergehenden Ansprüche, **dadurch gekennzeichnet, dass** der Ausgang (106) des zweiten Detektormittels (10) auf einen Eingang (102) rückgekoppelt ist.

7. Schaltungsanordnung nach einem der vorhergehenden Ansprüche, **dadurch gekennzeichnet, dass** die Stromversorgung des Heizelements eine Wechselstromversorgung ist und zwischen das erste und das zweite Detektormittel (6;10) eine Gleichrichteranordnung (7) und eine Glättungsschaltung (8) geschalten ist.

8. Schaltungsanordnung nach einem der vorhergehenden Ansprüche, **dadurch gekennzeichnet, dass** das Schaltmittel (2) ein Relais ist, das bei ordnungsgemäßem Betrieb des Heizelements (1) durch den ersten Zustand der Schaltersteuerungsschaltung (3) angezogen ist.

9. Schaltungsanordnung nach einem der vorhergehenden Ansprüche, **dadurch gekennzeichnet, dass** das Heizelement (1) eine elektrische Widerstandsheizung, insbesondere aus einer Dickschichtpaste, mit einem PTC-Verhalten ist, bei der der Widerstand mit zunehmender Temperatur steigt.

10. Heizvorrichtung für Fluide, **dadurch gekennzeichnet, dass** eine Schaltungsanordnung zum Schutz eines Heizelements (1) vor Überhitzung nach einem der vorhergehenden Ansprüche vorgesehen ist.

## Claims

1. Circuit arrangement for protection of a heating element (1) against overheating, the resistance value of which is a function of the temperature thereof, wherein the circuit arrangement has the following features:
a power supply, which is coupled with the heating element (1), for supply of current to the heating element (1) by way of a switching means (2);
a switch control circuit (3) with an output (34) for control of the switching means (2), wherein the switching means (2) is switched to be conductive when the switch control circuit (10) is disposed in a first state and is switched to be non-conductive when the switch control circuit (3) is disposed in a second state;
a current sensor means (4), which is coupled with the heating element (1) and at the output (41) of which a signal proportional to the current flowing through the heating element (1) can be tapped;
a first calibrating means (5), at the output (51) of which a signal proportional to the supply voltage of the heating element (1) can be tapped;
a first detector means (6), which has inputs (62, 63) respectively coupled with the outputs (41, 51) of the current sensor means (4) and the first calibrating means (5) and at the output (66) of which a difference signal formed from the signals of the current sensor means (4) and the calibrating means (5) can be tapped; and an evaluating circuit (7; 8; 9; 10), by which the difference signal, which is determined by the first detector means (6), can be compared with a reference signal and in dependence on the result the switch control circuit (3) can be brought by the evaluating circuit (3) from the first to the second state,
**characterised in that** the evaluating circuit comprises a second detector means (10) with two inputs (101, 102) and an output (106), wherein the output signal of the first detector means (6) can be fed to one input (101) and the reference signal can be fed to the other input (102) and wherein the output (106) forms the output of the evaluating circuit.

2. Circuit arrangement according to claim 1, **characterised in that** the current sensor means (4) and the first calibrating means (5) are configured in such a manner that signals able to be tapped at the outputs (41, 51) thereof have the same value at nominal resistance of the heating element (1).

3. Circuit arrangement according to claim 1 or 2, **characterised in that** a difference voltage is detectable by the first detector means (6) only in the case of a change in resistance of the heating element (1).

4. Circuit arrangement according to any one of the preceding claims, **characterised in that** the evaluating circuit comprises a second calibrating means (9) serving for setting of the reference signal.

5. Circuit arrangement according to claim 4, **characterised in that** the second calibrating means (9) is coupled with the supply voltage, which acts on the heating element (1), in order to derive the reference signal from the supply voltage.

6. Circuit arrangement according to any one of the preceding claims, **characterised in that** the output (106) of the second detector means (10) is feedback-coupled to an input (102).

7. Circuit arrangement according to any one of the preceding claims, **characterised in that** the current supply of the heating element is an alternating current supply and a rectifier arrangement (7) and a smoothing circuit (8) are connected between the first and the second detector means (6; 10).

8. Circuit arrangement according to any one of the preceding claims, **characterised in that** the switching means (2) is a relay which in the case of correct operation of the heating element (1) is pulled up by the first state of the switch control circuit (3).

9. Circuit arrangement according to any one of the preceding claims, **characterised in that** the heating element (1) is an electrical resistance heating means, particularly of a thick-film paste, with a PTC characteristic in which the resistance rises with increasing temperature.

10. Heating device for fluids, **characterised in that** a circuit arrangement for protection of a heating element (1) against overheating is provided according to any one of the preceding claims.

## Revendications

1. Dispositif de circuit destiné à protéger un élément chauffant (1) contre la surchauffe, dont la valeur de résistance est une fonction de sa température, le dispositif de circuit présentant les caractéristiques suivantes :
une alimentation en courant couplée à l'élément chauffant (1), destinée à fournir un courant à l'élément chauffant (1) par l'intermédiaire d'un moyen de commutation (2) ;
un circuit de commande de commutateur (3) comprenant une sortie (34) destinée à commander le moyen de commutation (2), le moyen de commutation (2) étant connecté de manière conductrice lorsque le circuit de commande de commutateur (10) se trouve dans un premier état, et étant connecté de manière non conductrice lorsque le circuit de commande de commutateur (3) se trouve dans un second état,
un moyen capteur de courant (4) couplé à l'élément chauffant (1), à la sortie (41) duquel moyen capteur de courant un signal proportionnel au courant circulant à travers l'élément chauffant (1) peut être prélevé ;
un premier moyen de graduation (5), à la sortie (51) duquel un signal proportionnel à la tension d'alimentation de l'élément chauffant (1) peut être prélevé ;
un premier moyen détecteur (6) qui a des entrées (62, 63) respectives couplées aux sorties (41, 51) du moyen capteur de courant (4) et du premier moyen de graduation (5), et à la sortie (66) duquel un signal différentiel formé à partir des signaux du moyen capteur de courant (4) et du moyen de graduation (5) peut être prélevé ; et
un circuit d'évaluation (7 ; 8 ; 9 ; 10) au moyen duquel le signal différentiel détecté par le premier moyen détecteur (6) est comparable à un signal de référence et au moyen duquel le circuit de commande de commutateur (3), en fonction du résultat, peut être mis du premier dans le second état par le circuit d'évaluation (3), **caractérisé en ce que** le circuit d'évaluation présente un second moyen détecteur (10) comprenant deux entrées (101, 102) et une sortie (106), le signal de sortie du premier moyen détecteur (6) pouvant être amené à une entrée (101) et le signal de référence pouvant être amené à l'autre entrée (102) et la sortie (106) formant la sortie du circuit d'évaluation.

2. Dispositif de circuit selon la revendication 1, **caractérisé en ce que** le moyen capteur de courant (4) et le premier moyen de graduation (5) sont configurés de manière à ce que les signaux pouvant être prélevés à leurs sorties (41, 51) présentent la même grandeur lors de la résistance nominale de l'élément chauffant (1).

3. Dispositif de circuit selon la revendication 1 ou 2, **caractérisé en ce qu'**une tension différentielle est détectable par le premier moyen détecteur (6) seulement avec une modification de résistance de l'élément chauffant (1).

4. Dispositif de circuit selon l'une quelconque des revendications précédentes, **caractérisé en ce que** le circuit d'évaluation présente un second moyen de graduation (9) qui sert à régler le signal de référence.

5. Dispositif de circuit selon la revendication 4, **caractérisé en ce que** le second moyen de graduation (9) est couplé à la tension d'alimentation alimentant l'élément chauffant (1), afin de dévier le signal de référence de la tension d'alimentation.

6. Dispositif de circuit selon l'une quelconque des revendications précédentes, **caractérisé en ce que** la sortie (106) du second moyen détecteur (10) est couplée en retour à une entrée (102).

7. Dispositif de circuit selon l'une quelconque des revendications précédentes, **caractérisé en ce que** l'alimentation en courant de l'élément chauffant est une alimentation en courant alternatif et **en ce qu'**un dispositif redresseur (7) et un circuit de lissage (8) sont connectés entre le premier et le second moyens détecteurs (6 ; 10).

8. Dispositif de circuit selon l'une quelconque des revendications précédentes, **caractérisé en ce que** le moyen de commutation (2) est un relais qui, lors du fonctionnement en bon ordre de l'élément chauffant (1), est excité en raison du premier état du circuit de commande de commutateur (3).

9. Dispositif de circuit selon l'une quelconque des revendications précédentes, **caractérisé en ce que** l'élément chauffant (1) est un chauffage électrique par résistance, notamment constitué d'une pâte à couches épaisses, à comportement CTP, dans lequel la résistance augmente au fur et à mesure que la température croît.

10. Dispositif de chauffage pour des fluides, **caractérisé en ce qu'**un dispositif de circuit destiné à la protection d'un élément chauffant (1) contre la surchauffe selon l'une quelconque des revendications précédentes est ménagé.
